# EUROPÄISCHE PATENTSCHRIFT

(11) **EP 2 210 045 B1**
(45) Veröffentlichungstag und Bekanntmachung des Hinweises auf die Patenterteilung: **27.07.2016**
(21) Anmeldenummer: 08717319.1
(22) Anmeldetag: 03.03.2008
(51) Int. Cl.: F23D 11/36, F23M 5/02, F23R 3/00

(54) **BRENNERELEMENT UND BRENNER MIT ALUMINIUMOXIDBESCHICHTUNG UND VERFAHREN ZUR BESCHICHTUNG EINES BRENNERELEMENTES**
BURNER ELEMENT AND BURNER HAVING ALUMINUM OXIDE COATING AND METHOD FOR COATING A BURNER ELEMENT
ÉLÉMENT DE BRÛLEUR ET BRÛLEUR COMPORTANT UN PLACAGE EN ALUMINE ET PROCÉDÉ DE PLACAGE D'UN ÉLÉMENT DE BRÛLEUR

(30) Priorität: 23.11.2007 DE 102007056805
(43) Veröffentlichungstag der Anmeldung: 28.07.2010
(73) Patentinhaber: Siemens Aktiengesellschaft, 80333 München (DE)
(72) Erfinder: BÖTTCHER, Andreas, 40882 Ratingen (DE); KRUSCH, Claus, 45473 Mülheim An Der Ruhr (DE); STAMM, Werner, 45481 Mülheim An Der Ruhr (DE); WÖRZ, Ulrich, 32765 Oviedo (Florida) (US)
(86) Internationale Anmeldenummer: PCT/EP2008/052556
(87) Internationale Veröffentlichungsnummer: WO 2009/065625

(56) Entgegenhaltungen:
- EP-A- 1 217 095
- EP-A- 1 669 545
- WO-A-2006/058629
- DE-A1-102005 050 661

## Beschreibung

Die vorliegende Erfindung bezieht sich auf ein Brennerelement und einen Brenner mit einer Aluminiumoxidbeschichtung. Zudem bezieht sich die vorliegende Erfindung auf ein Verfahren zur Beschichtung eines Brennerelementes.

Ein Brennerelement mit den Merkmalen des Oberbegriffs des Anspruchs 1 ist aus dem EP 1 217 095 bekannt.

Bestimmte Teile eines Brenners kommen in ihrem Inneren typischerweise mit Brennstoff in Kontakt. Durch die chemische Reaktion von in dem Brennstoff enthaltenen Schwefelverbindungen (H₂S) mit dem Grundwerkstoff des Brenners können sich im Inneren des Brenners Eisensulfid-Beläge bilden. Bei dem Grundwerkstoff des Brenners handelt es sich typischerweise um Stahl, beispielsweise um Stahl der Sorte 16Mo3. Die im Inneren des Brenners entstehenden Eisensulfid-Beläge können abplatzen und teilweise zur Verstopfung der Bohrungen, durch die der Brennstoff in eine Brennkammer eingedüst wird, führen. Die Bohrungen, durch die der Brennstoff in die Brennkammer eingedüst wird, haben typischerweise einen Durchmesser von 1,5mm. Eine Verstopfung dieser Bohrungen hat eine ungleichmäßige Verbrennung zur Folge, wodurch sich insbesondere die Emissionswerte des betroffenen Brenners erheblich verschlechtern. Die Verfügbarkeit des betroffenen Brenners beziehungsweise der zugehörigen Brennkammer ist in diesem Fall beeinträchtigt.

Das Problem einer möglichen Verstopfung der Bohrungen infolge von abplatzenden Eisensulfid-Belägen wurde bisher entweder durch eine Reinigung des Brenners oder durch den Einbau eines neuen Brenners gelöst. Allerdings kostet eine Reinigung viel Zeit. In solchen Fällen muss daher in der Regel ein kompletter Satz neuer Brenner eingebaut werden, was sehr teuer ist. Zwar treten die beschriebenen Schwierigkeiten nur an Maschinen auf, die mit Vorwärmung betrieben werden, allerdings werden diese Maschinen zunehmend angewendet. Es ist daher mit hohen Zusatzkosten infolge der möglichen Bildung von Eisensulfid-Belägen zu rechnen.

Es ist daher eine Aufgabe der vorliegenden Erfindung, ein vorteilhaftes Brennerelement zur Verfügung zu stellen. Es ist eine weitere Aufgabe der vorliegenden Erfindung, einen vorteilhaften Brenner zur Verfügung zu stellen. Zudem ist es eine Aufgabe der vorliegenden Erfindung, ein vorteilhaftes Verfahren zum Beschichten einer potentiell mit einem Brennstoff in Kontakt kommenden Oberfläche eines Brennerelementes zur Verfügung zu stellen.

Die erste Aufgabe wird durch ein Brennerelement nach Anspruch 1 gelöst. Die zweite Aufgabe wird durch einen Brenner nach Anspruch 5 gelöst. Die dritte Aufgabe wird durch ein Verfahren nach Anspruch 7 gelöst. Die abhängigen Ansprüche beinhalten weitere, vorteilhafte Ausgestaltungen der Erfindung.

Das erfindungsgemäße Brennerelement umfasst eine Oberfläche, die potentiell mit einem Brennstoff in Kontakt kommt. Die potentiell mit dem Brennstoff in Kontakt kommende Oberfläche weist eine Aluminiumoxid enthaltende Beschichtung auf. Durch das Beschichten des Brennerelementes mit einer Aluminiumoxid-Schicht wird eine Schutzschicht zwischen dem Werkstoff des Brennerelementes und den aggressiven Schwefelverbindungen im Brennstoff erzeugt. Dadurch wird verhindert, dass sich in dem Brennerelement Partikel oder möglicherweise abplatzende Beläge bilden. Auf diese Weise wird einer möglichen Verstopfung der Bohrungen, durch die der Brennstoff in eine Brennkammer eingedüst wird, vorgebeugt und so die Einhaltung der Emissionsgrenzwerte erleichtert. Weiterhin können mithilfe des erfindungsgemäßen Brennerelementes Kosten für eine möglicherweise nötige Reinigung beziehungsweise den Einbau eines neuen Brenners eingespart werden.

Die Aluminiumoxid enthaltende Beschichtung des erfindungsgemäßen Brennerelementes umfasst α-Al₂O₃. Erfindungsmäßig umfasst die Beschichtung eine aluminiumreiche erste Schicht und eine über der ersten Schicht angeordnete Aluminiumoxid enthaltende zweite Schicht ist, wobei die Aluminiumoxid enthaltende Beschichtung eine Aluminiumoxid-Schicht. Die Beschichtung kann vorteilhafterweise eine Schichtdicke von 50µm bis 100µm aufweisen.

Das erfindungsgemäße Brennerelement kann Stahl als Grundwerkstoff umfassen, beispielsweise Stahl der Sorte 16Mo3. Bei dem erfindungsgemäßen Brennerelement kann es sich um eine Brennstoff-Zuleitung oder einen Brennstoffverteiler handeln, zum Beispiel um eine Heizgas-Zuleitung, eine Heizgas-Vormisch-Zuleitung oder eine Heizgas-Diffusions-Zuleitung.

Der erfindungsgemäße Brenner umfasst ein erfindungsgemäßes Brennerelement mit den zuvor beschriebenen Merkmalen. Bei dem erfindungsgemäßen Brenner kann es sich beispielsweise um einen Pilotbrenner handeln. Insbesondere ein Pilotbrenner kann kleine Düsenbohrungen mit einem Durchmesser zwischen 0,5mm und 2mm, vorzugsweise von 1mm, aufweisen. Diese Bohrungen werden durch die erfindungsgemäße Beschichtung des Brennerelementes mit Aluminiumoxid effektiv vor einer möglichen Verstopfung geschützt. Insgesamt hat der erfindungsgemäße Brenner dieselben Vorteile wie das erfindungsgemäße Brennerelement.

Sowohl der erfindungsgemäße Brenner als auch das erfindungsgemäße Brennerelement können beispielsweise in einer Brennkammer, vorzugsweise in einer Brennkammer einer Gasturbine, Verwendung finden.

Im Rahmen des erfindungsgemäßen Verfahrens zum Beschichten einer potentiell mit einem Brennstoff in Kontakt kommenden Oberfläche eines Brennerelementes wird die potentiell mit dem Brennstoff in Kontakt kommende Oberfläche mit einer Aluminiumoxid umfassenden Schicht beschichtet. Durch die Beschichtung wird der Brennerwerkstoff vor den aggressiven Schwefelverbindungen im Brennstoff wirksam gegen eine mögliche Bildung von Eisensulfid-Belägen geschützt.

Das Aluminiumoxid kann durch chemische Gasphasenabscheidung (CVD: Chemical Vapour Deposition) auf die Oberfläche aufgebracht werden. Derartige Beschichtungsverfahren lassen sich sehr kostengünstig realisieren. Grundsätzlich kann die Aluminiumoxid-Schicht aber auch durch ein anderes Diffusionsverfahren aufgebracht werden. Im Rahmen der chemischen Gasphasenabscheidung wird die Oberfläche bei einer Temperatur zwischen 1000°C und 1100°C mit Aluminium angereichert. Vorteilhafterweise wird die Oberfläche bei einer Temperatur von 1050°C mit Aluminium angereichert. Zudem kann im Rahmen der chemischen Gasphasenabscheidung die Oberfläche während einer Zeit zwischen 3 und 5 Stunden, vorteilhafterweise während einer Zeit von 4 Stunden, mit Aluminium angereichert werden. Weiterhin kann im Rahmen der chemischen Gasphasenabscheidung die Oberfläche nach der Anreicherung mit Aluminium bei einer Temperatur zwischen 800°C und 900°C, vorzugsweise bei 850°C, gealtert werden. Darüber hinaus kann im Rahmen der chemischen Gasphasenabscheidung die Oberfläche nach der Anreicherung mit Aluminium während einer Zeit zwischen 1 und 3 Stunden, vorzugsweise während einer Zeit von 2 Stunden, gealtert werden.

Durch die Anreicherung mit Aluminium und die nachfolgende Alterung entsteht auf der Oberfläche eine Aluminiumoxid-Schicht. Diese Schicht ist extrem stabil und reaktionsarm. Mithilfe des erfindungsgemäßen Verfahrens kann beispielsweise eine Beschichtung mit einer Dicke von 50µm bis 100µm erzeugt werden. Aufgrund dieser relativ geringen Schichtdicke ist nicht mit einem thermischen Abplatzen zu rechnen. Auch wird durch dieses Verfahren gewährleistet, dass die potentiell mit einem Brennstoff in Kontakt kommende Oberfläche des Brennerelementes, bei der es sich beispielsweise um das Innere eines Brenners handeln kann, komplett mit einer Schutzschicht überzogen wird. Das erfindungsgemäße Verfahren erlaubt insgesamt eine kostengünstige Beschichtung der Oberfläche eines Brennerelementes beziehungsweise eines Brenners. Durch die Beschichtung wird zudem eine Verbesserung der Emissionswerte des Brenners erreicht.

Weitere Eigenschaften, Merkmale und Vorteile der vorliegenden Erfindung werden im Folgenden anhand eines Ausführungsbeispiels unter Bezugnahme auf die beiliegenden Figuren näher beschrieben.
- Fig. 1: zeigt die Anhängigkeit der CO-Emissionswerte eines konventionellen Brenners in Abhängigkeit von der Betriebszeit.
- Fig. 2: zeigt schematisch einen Schnitt durch einen im Mischbetrieb betreibbaren Brenner des Typs HR3B.
- Fig. 3: zeigt schematisch einen Schnitt durch einen Teil eines erfindungsgemäßen Brennerelementes.
- Fig. 4: zeigt schematisch einen Schnitt durch einen Teil eines Brennerelementes nach dem Stand der Technik.
- Fig. 5: zeigt beispielhaft eine Gasturbine 100 in einem Längsteilschnitt.
- Fig. 6: zeigt schematisch eine Brennkammer einer Gasturbine.
- Fig. 7: zeigt in perspektivischer Ansicht eine Laufschaufel oder Leitschaufel einer Strömungsmaschine, die sich entlang einer Längsachse erstreckt.

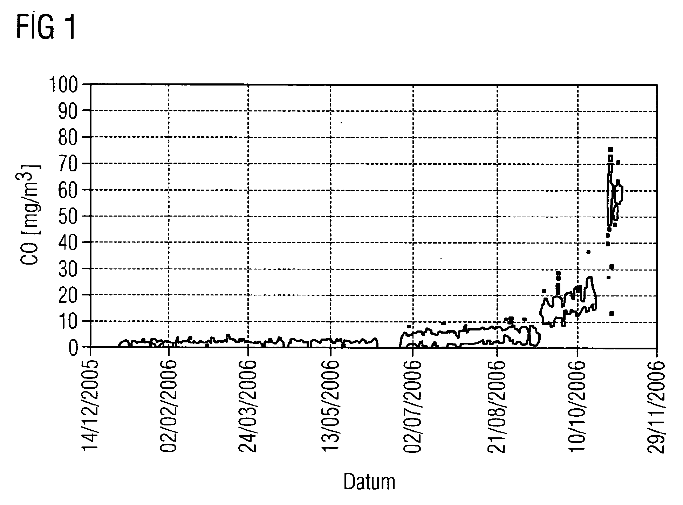

Im Folgenden wird ein Ausführungsbeispiel der vorliegenden Erfindung anhand der Figuren 1 bis 7 näher erläutert.

Die Figur 1 zeigt die Abhängigkeit der CO-Emissionswerte eines herkömmlichen Brenners in Abhängigkeit von der Betriebszeit. Auf der x-Achse des in der Figur 1 gezeigten Diagramms ist das jeweilige Datum der CO-Emissionsmessung aufgetragen. Auf der y-Achse sind die jeweils gemessenen CO-Emissionswerte in Milligramm pro Kubikmeter aufgetragen.

Das Diagramm zeigt, dass für den betroffenen Brenner die CO-Emissionswerte in der Zeit zwischen Mitte Dezember 2005 und Mitte Juni 2006 unterhalb von 5mg/m³ lagen. In der Zeit zwischen Mitte Juni 2006 und Mitte September 2006 stiegen die CO-Emissionswerte kontinuierlich an, lagen jedoch überwiegend unterhalb von 10mg/m³. Im Zeitraum zwischen Mitte September 2006 und Anfang November 2006 stiegen die CO-Emissionswerte stärker als zwischen Mitte Juni 2006 und Mitte September 2006 an und lagen in diesem Zeitraum überwiegend zwischen 10mg/m³ und 30mg/m³. Zwischen Anfang November 2006 und Mitte November 2006 wurden dann CO-Emissionswerte überwiegend zwischen 40mg/m³ und 80mg/m³ gemessen.

Die in der Figur 1 dargestellte Messung zeigt, dass eine zunehmende Verstopfung des Brenners infolge einer Bildung von Eisensulfid-Belägen mit einer erheblichen Verschlechterung der CO-Emissionswerte einhergeht. Bei dem beispielhaft verwendeten Brenner handelt es sich um einen Brenner einer Gasturbine.

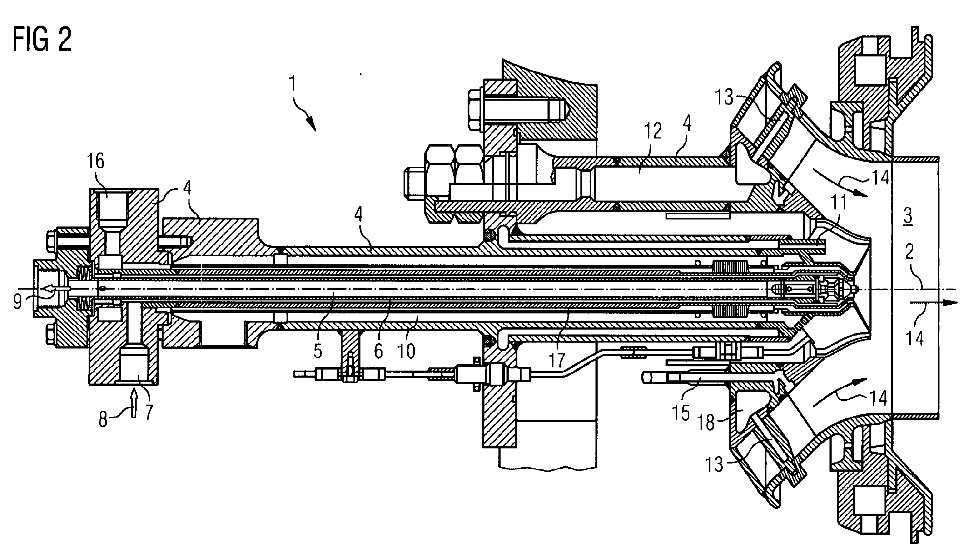

Der Aufbau eines Brenners, wie er beispielsweise im Rahmen einer Gasturbine verwendet werden kann, wird im Folgenden anhand der Figur 2 näher erläutert. Die Figur 2 zeigt schematisch einen Schnitt durch einen erfindungsgemäßen Brenner 1. Der Brenner 1 ist an eine Brennkammer 3 angeschlossen. Die Mittelachse des Brenners 1 ist durch die Bezugsziffer 2 gekennzeichnet.

Der Brenner 1 umfasst ein Gehäuse 4. Innerhalb des Gehäuses 4 ist entlang der Mittelachse 2 eine Heizölrücklaufleitung 5 angeordnet. Um die Heizölrücklaufleitung 5 herum ist eine Heizölzulaufleitung 6 konzentrisch angeordnet, die ebenfalls entlang der Mittelachse 2 verläuft. Es kann sich dabei auch um mehrere Heizölzulaufleitungen 6 handeln, die konzentrisch um die Heizölrücklaufleitung 5 angeordnet sind. Die Heizölzulaufleitung 6 ist an der der Brennkammer 3 abgewandten Seite mit einem Anschlussrohr 7 verbunden, welches an eine Heizölversorgung angeschlossen werden kann. Die Strömungsrichtung des Heizöls ist durch die Pfeile 8 und 9 angedeutet. Das Heizöl kann zunächst durch das Anschlussrohr 7 in die Heizölzulaufleitung 6 strömen. Durch diese Heizölzulaufleitung 6 kann das Heizöl parallel zur Mittelachse 2 zur Brennkammer 3 hin strömen und in die Brennkammer 3 eingedüst werden. Überflüssiges Heizöl kann parallel zur Mittelachse 2 durch die Heizölrücklaufleitung 5 von der Brennkammer 3 in Richtung des Pfeils 9 weg strömen.

Radial außerhalb der Heizölrücklaufleitung 5 und der Heizölzulaufleitung 6 in Bezug auf die Mittelachse 2 sind entlang der Mittelachse 2 eine oder mehrere Wasserleitungen 17 angeordnet. Die Wasserleitung beziehungsweise die Wasserleitungen 17 sind an der der Brennkammer 3 abgewandten Seite des Brenners 1 mit einem Wasserzulauf 16 verbunden.

Konzentrisch um die Heizölrücklaufleitung 5, die Heizölzulaufleitung 6 und die Wasserleitungen 17 herum ist eine Heizgas-Diffusions-Leitung 10 angeordnet. Das Heizgas kann werden in der Heizgas-Diffusions-Leitung 10 zu Brennstoffdüsen 11 weitergeleitet. Die Brennstoffdüsen 11 sind ebenfalls konzentrisch um die Mittelachse 2 angeordnet und ermöglichen ein Eindüsen des Brennstoffes in die Brennkammer 3.

Tn Bezug auf die Mittelachse 2 ist radial außerhalb der Heizgas-Diffusions-Leitung 10 eine Heizgas-Vormisch-Zuleitung 12 angeordnet, durch die Heizgas über einen ringförmig um die Mittelachse 2 angeordneten Ringverteiler 18 zu weiteren Brennstoffdüsen 13 geleitet werden kann. Durch die Brennstoffdüsen 13 kann der Brennstoff in die Brennkammer 3 eingedüst werden. Die Strömungsrichtung des Brennstoff-Luft-Gemisches in der Brennkammer 3 ist durch Pfeile 14 gekennzeichnet.

Die Innenflächen der Heizgas-Diffusions-Leitung 10, der Heizgas-Vormisch-Zuleitung 12 und des Ringverteilers 18 stehen im direkten Kontakt zu dem durch sie strömenden Heizgas. Aufgrund der chemischen Reaktion von im Heizgas enthaltenen Schwefelverbindungen mit dem Grundwerkstoff dieser Bauteile können sich an den inneren Oberflächen derselben Eisensulfid-Beläge bilden. Diese Beläge können abplatzen und zu einer teilweisen Verstopfung der Brennstoffdüsen 11, 13 führen.

Bei dem Grundwerkstoff der beschriebenen Bauelemente, also insbesondere der Heizgas-Diffusions-Leitung 10, der Heizgas-Vormisch-Zuleitung 12 und des Ringverteilers 18, handelt es sich im vorliegenden Ausführungsbeispiel um Stahl der Sorte 16Mo3. Es kann sich bei dem Grundwerkstoff auch um ein anderes Material, beispielsweise eine andere Stahlsorte, handeln. Zur Vermeidung der Ausbildung von Eisensulfid-Belägen an den inneren Oberflächen der Heizgas-Diffusions-Leitung 10, der Heizgas-Vormisch-Zuleitung 12 und des Ringverteilers 18 sind die inneren Oberflächen der genannten Bauelemente mit einer Aluminiumoxid-Schicht, die α-Al₂O₃ umfasst, überzogen. Auf diese Weise wird eine Schutzschicht zwischen dem Grundwerkstoff und den aggressiven Schwefelverbindungen im Brennstoff erzeugt.

Die Aluminiumoxid-Schicht wird durch ein Diffusionsverfahren, insbesondere durch chemische Gasphasenabscheidung (CVD) aufgebracht. Das Beschichtungsverfahren gliedert sich in zwei Arbeitsabschnitte. Im ersten Schritt wird mittels CVD die Oberfläche bei 1050°C über 4 Stunden mit Aluminium angereichert. Im zweiten Schritt werden die Bauteile in einem Ofen bei 850°C zwei Stunden lang gealtert. Dadurch entsteht die Aluminiumoxid-Schicht, die extrem stabil und reaktionsarm ist.

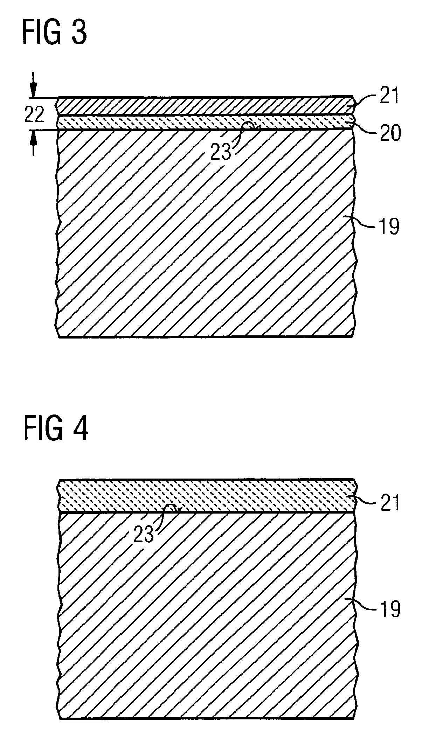

Die durch das beschriebene Verfahren entstandene Beschichtung ist in der Figur 3 schematisch dargestellt. Die Figur 3 zeigt einen Schnitt durch einen Teil eines erfindungsgemäßen Brennerelementes, bei dem es sich zum Beispiel um die Heizgas-Diffusions-Leitung 10, die Heizgas-Vormisch-Zuleitung 12 oder den Ringverteilers 18 des erfindungsgemäßen Brenners 1 handeln kann. Die Bezugsziffer 19 kennzeichnet den Grundwerkstoff des entsprechenden Brennerelementes 10, 12, 18. Bei dem Grundwerkstoff 19 handelt es sich im vorliegenden Ausführungsbeispiel um Stahl der Sorte 16Mo3. Auf der inneren Oberfläche 23 des Brennerelementes 10, 12, 18 befindet sich eine Aluminium enthaltende aluminiumreiche Zone 20. Auf dieser aluminiumreichen Zone 20 befindet sich eine Aluminiumoxid-Schicht 21, bei der es sich im vorliegenden Ausführungsbeispiel um eine α-Al₂O₃-Schicht handelt. α zeigt hierbei an, dass es sich um die Aluminiumoxidmodifikation mit rhomboedrischer Gitterstruktur handelt. α-Al₂O₃ ist auch als Korund und Saphir bekannt.

Die Dicke der Beschichtung 22, bestehend aus der aluminiumreichen Zone 20 und der Aluminiumoxid-Schicht 21, beträgt im vorliegenden Ausführungsbeispiel zwischen 50µm und 100µm.

Eine Beschichtung nach dem Stand der Technik ist in der Figur 4 dargestellt. Die Figur 4 zeigt schematisch einen Schnitt durch einen Teil eines Brennerelementes. Im Unterschied zu Figur 3 ist in der Figur 4 auf der inneren Oberfläche 23 des Brennerelementes 10, 12, 18, bei dessen Grundwerkstoff 19 es sich um Stahl der Sorte 16Mo3 handelt, eine Aluminiumoxid-Schicht 21 direkt aufgebracht worden.

Die Beschichtung der inneren Oberflächen von mit Brennstoff potentiell in Kontakt kommenden Brennerelementen mit einer Aluminiumoxid-Schicht verhindert die Bildung von Eisensulfid-Belägen und damit die Bildung von Partikeln im Brenner, die zu einer Verstopfung der Brennstoffdüsen führen können.

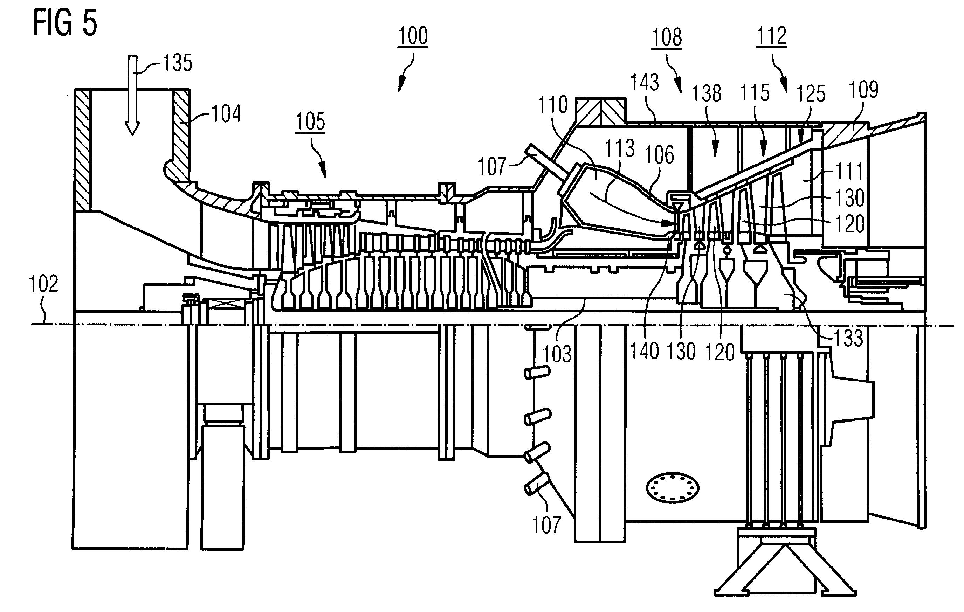

Die Figur 5 zeigt beispielhaft eine Gasturbine 100 in einem Längsteilschnitt.

Die Gasturbine 100 weist im Inneren einen um eine Rotationsachse 102 drehgelagerten Rotor 103 mit einer Welle 101 auf, der auch als Turbinenläufer bezeichnet wird.

Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.

Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.

Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.

An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.

Um den dort herrschenden Temperaturen standzuhalten, können diese mittels eines Kühlmittels gekühlt werden.

Ebenso können Substrate der Bauteile eine gerichtete Struktur aufweisen, d.h. sie sind einkristallin (SX-Struktur) oder weisen nur längsgerichtete Körner auf (DS-Struktur).

Als Material für die Bauteile, insbesondere für die Turbinenschaufel 120, 130 und Bauteile der Brennkammer 110 werden beispielsweise eisen-, nickel- oder kobaltbasierte Superlegierungen verwendet.

Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierungen Teil der Offenbarung.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium, Scandium (Sc) und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1, die bzgl. der chemischen Zusammensetzung Tcil dieser Offenbarung sein sollen.

Auf der MCrAlX kann noch eine Wärmedämmschicht vorhanden sein, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid. Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

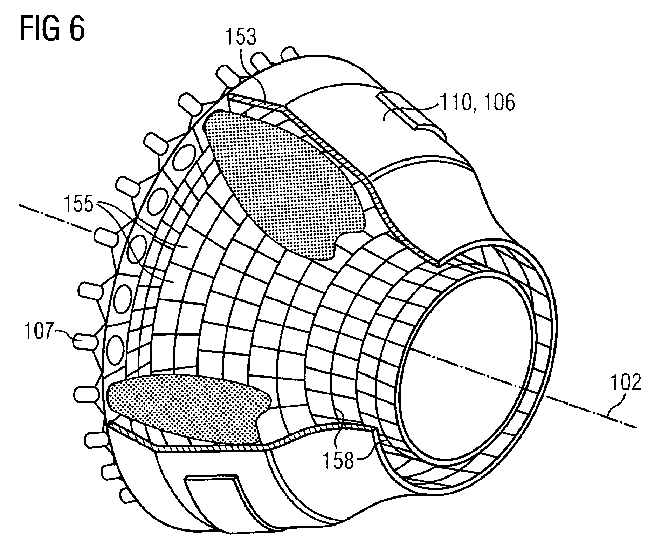

Die Figur 6 zeigt eine Brennkammer 110 einer Gasturbine. Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.

Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in dem Hitzeschildelement 155 repariert. Danach erfolgt eine Wiederbeschichtung der Hitzeschildelemente 155 und ein erneuter Einsatz der Hitzeschildelemente 155.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

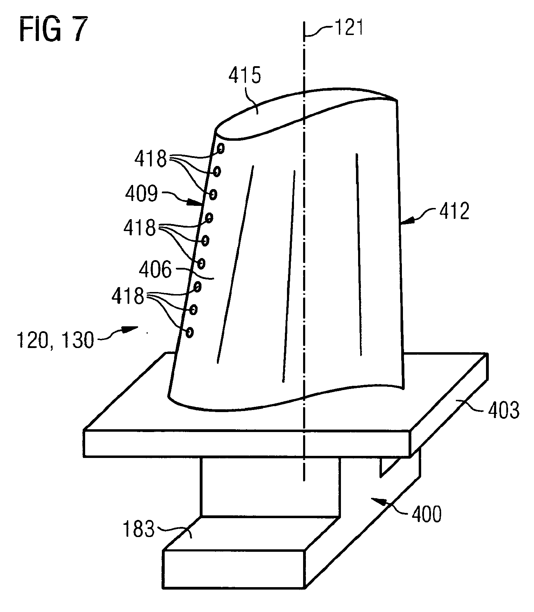

Die Figur 7 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.

Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).

Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.

Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierung Teil der Offenbarung.

Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.

Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.

Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).

Solche Verfahren sind aus der US-PS 6,024,792 und der EP 0 892 090 A1 bekannt; diese Schriften sind bzgl. des Erstarrungsverfahrens Teil der Offenbarung.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Die Dichte liegt vorzugsweise bei 95% der theoretischen Dichte.

Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8A1-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10A1-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Die Wärmedämmschicht bedeckt die gesamte MCrAlX-Schicht.

Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

## Patentansprüche

1. Brennerelement (10, 12, 18) welches eine Oberfläche (23) umfasst, die potentiell mit einem Brennstoff in Kontakt kommt, wobei
die potentiell mit dem Brennstoff in Kontakt kommende Oberfläche (23) eine Aluminiumoxid enthaltende Beschichtung (21) aufweist, und wobei das Brennerelement (10, 12, 18) Stahl als Grundwerkstoff umfasst, **dadurch gekennzeichnet, dass**
die Beschichtung eine aluminiumreiche erste Schicht (20) und eine über der ersten Schicht (20) angeordnete Aluminiumoxid enthaltende zweite Schicht (21) umfasst, wobei die Aluminiumoxid enthaltende Beschichtung (21) α-Al₂O₃ umfasst,
und wobei die Aluminiumoxid enthaltende Beschichtung eine Aluminiumoxid-Schicht (21) ist.

2. Brennerelement (10, 12, 18) nach Anspruch 1,
**dadurch gekennzeichnet, dass**
die Beschichtung eine Schichtdicke (22) von 50µm bis 100µm aufweist.

3. Brennerelement (10, 12, 18) nach Anspruch 1,
**dadurch gekennzeichnet, dass**
das Brennerelement (10, 12, 18) Stahl der Sorte 16Mo3 als Grundwerkstoff umfasst.

4. Brennerelement (10, 12, 18) nach einem der Ansprüche 1 bis 3,
**dadurch gekennzeichnet, dass**
es sich bei dem Brennerelement (10, 12, 18) um eine Brennstoff-Zuleitung oder einen Brennstoffverteiler handelt.

5. Brenner (1, 107),
der ein Brennerelement (10, 12, 18) nach einem der Ansprüche 1 bis 4 umfasst.

6. Brenner (1, 107) nach Anspruch 5,
**dadurch gekennzeichnet, dass**
es sich bei dem Brenner (1, 107) um einen Pilotbrenner handelt.

7. Verfahren zum Beschichten einer potentiell mit einem Brennstoff in Kontakt kommenden Oberfläche eines Brennerelementes (10, 12, 18) nach einem der Ansprüche 1 bis 4,
worin die potentiell mit dem Brennstoff in Kontakt kommende Oberfläche (23) mit einer Aluminiumoxid umfassenden Schicht (21) beschichtet wird,
worin im Rahmen der chemischen Gasphasenabscheidung die Oberfläche (23) bei einer Temperatur zwischen 1000°C und 1100°C mit Aluminium angereichert wird.

8. Verfahren nach Anspruch 7,
worin das Aluminiumoxid (21) durch chemische Gasphasenabscheidung (CVD) auf die Oberfläche (23) aufgebracht wird.

9. Verfahren nach Anspruch 8,
worin die Oberfläche (23) bei einer Temperatur von 1050°C mit Aluminium angereichert wird.

10. Verfahren nach Anspruch 7 oder 9,
worin im Rahmen der chemischen Gasphasenabscheidung die Oberfläche (23) während einer Zeit zwischen 3 und 5 Stunden mit Aluminium angereichert wird.

11. Verfahren nach Anspruch 10,
worin die Oberfläche (23) während einer Zeit von 4 Stunden mit Aluminium angereichert wird.

12. Verfahren nach einem der Ansprüche 7 bis 11,
worin im Rahmen der chemischen Gasphasenabscheidung die Oberfläche (23) nach der Anreicherung mit Aluminium bei einer Temperatur zwischen 800°C und 900°C gealtert wird.

13. Verfahren nach Anspruch 12,
worin die Oberfläche (23) bei einer Temperatur von 850°C gealtert wird.

14. Verfahren nach einem der Ansprüche 7 bis 13,
worin im Rahmen der chemischen Gasphasenabscheidung die Oberfläche (23) nach der Anreicherung mit Aluminium während einer Zeit zwischen 1 und 3 Stunden gealtert wird.

15. Verfahren nach Anspruch 14,
worin die Oberfläche (23) während einer Zeit von 2 Stunden gealtert wird.

16. Verfahren nach einem der Ansprüche 7 bis 15,
worin eine Beschichtung mit einer Dicke (22) von 50µm bis 100µm erzeugt wird.

## Claims

1. Burner element (10, 12, 18) comprising a surface (23) which potentially comes into contact with a fuel, wherein the surface (23) which potentially comes into contact with the fuel has an aluminum oxide-containing coating (21), and wherein the burner element (10, 12, 18) comprises steel as base material,
**characterized in that**
the coating comprises an aluminum-rich first layer (20) and an aluminum oxide-containing second layer (21) arranged above the first layer (20),
wherein the aluminum oxide-containing coating (21) comprises α-Al₂O₃,
and wherein the aluminum oxide-containing coating is an aluminum oxide layer (21).

2. Burner element (10, 12, 18) according to Claim 1,
**characterized in that**
the coating has a layer thickness (22) of 50 µm to 100 µm.

3. Burner element (10, 12, 18) according to Claim 1,
**characterized in that**
the burner element (10, 12, 18) comprises 16Mo3 steel as base material.

4. Burner element (10, 12, 18) according to one of Claims 1 to 3,
**characterized in that**
the burner element (10, 12, 18) is a fuel feed line or a fuel distributor.

5. Burner (1, 107)
comprising a burner element (10, 12, 18) according to one of Claims 1 to 4.

6. Burner (1, 107) according to Claim 5,
**characterized in that**
the burner (1, 107) is a pilot burner.

7. Process for coating a surface of a burner element (10, 12, 18) according to one of Claims 1 to 4 which potentially comes into contact with a fuel,
wherein the surface (23) which potentially comes into contact with the fuel is coated with an aluminum oxide-comprising layer (21),
wherein the surface (23) is enriched with aluminum at a temperature between 1000°C and 1100°C within the scope of the chemical vapor deposition.

8. Process according to Claim 7,
wherein the aluminum oxide (21) is applied to the surface (23) by chemical vapor deposition (CVD).

9. Process according to Claim 8,
wherein the surface (23) is enriched with aluminum at a temperature of 1050°C.

10. Process according to Claim 7 or 9,
wherein the surface (23) is enriched with aluminum over a period of time of between 3 and 5 hours within the scope of the chemical vapor deposition.

11. Process according to Claim 10,
wherein the surface (23) is enriched with aluminum over a period of time of 4 hours.

12. Process according to one of Claims 7 to 11,
wherein the surface (23) is aged at a temperature between 800°C and 900°C, after it has been enriched with aluminum, within the scope of the chemical vapor deposition.

13. Process according to Claim 12,
wherein the surface (23) is aged at a temperature of 850°C.

14. Process according to one of Claims 7 to 13,
wherein the surface (23) is aged over a period of time of between 1 and 3 hours, after it has been enriched with aluminum, within the scope of the chemical vapor deposition.

15. Process according to Claim 14,
wherein the surface (23) is aged over a period of time of 2 hours.

16. Process according to one of Claims 7 to 15,
wherein a coating having a thickness (22) of 50 µm to 100 µm is produced.

## Revendications

1. Elément ( 10, 12, 18 ) de brûleur, qui comprend une surface ( 23 ) venant potentiellement en contact avec un combustible, dans lequel
la surface ( 23 ) venant potentiellement en contact avec le combustible a un revêtement ( 21 ) contenant de l'oxyde d'aluminium et dans lequel
l'élément ( 10, 12, 18 ) de brûleur comprend de l'acier comme matériau de base,
**caractérisé en ce que**
le revêtement comprend une première couche ( 20 ) riche en aluminium et une deuxième couche ( 21 ) contenant de l'oxyde d'aluminium et disposée au-dessus de la première couche ( 20 ), la couche ( 21 ) contenant de l'oxyde d'aluminium comprenant de l'Al₂O₃ α,
et dans lequel le revêtement contenant de l'oxyde d'aluminium est une couche ( 21 ) d'oxyde d'aluminium.

2. Elément ( 10, 12, 18 ) de brûleur suivant la revendication 1,
**caractérisé en ce que**
le revêtement a une épaisseur ( 22 ) de couche de 50 µm à 100 µm.

3. Elément ( 10, 12, 18 ) de brûleur suivant la revendication 1,
**caractérisé en ce que**
l'élément ( 10, 12, 18 ) de brûleur comprend de l'acier du type 16Mo3 comme matériau de base.

4. Elément ( 10, 12, 18 ) de brûleur suivant l'une des revendications 1 à 3,
**caractérisé en ce que**
l'élément ( 10, 12, 18 ) de brûleur est un conduit d'apport de combustible ou un répartiteur de combustible.

5. Brûleur ( 1, 107 ),
qui comprend un élément ( 10, 12, 18 ) de brûleur suivant l'une des revendications 1 à 4.

6. Brûleur ( 1, 107 ) suivant la revendication 5,
**caractérisé en ce que**
le brûleur ( 1, 107 ) est un brûleur pilote.

7. Procédé de revêtement d'une surface venant potentiellement en contact avec un combustible d'un élément ( 10, 12, 18 ) de brûleur suivant l'une des revendications 1 à 4,
dans lequel on revêt la surface ( 23 ) venant potentiellement en contact avec le combustible d'une couche ( 21 ) comprenant de l'oxyde d'aluminium,
dans lequel, dans le cadre du dépôt chimique en phase gazeuse, on enrichit la surface ( 23 ) en aluminium à une température comprise entre 1 000°C et 1 100°C.

8. Procédé suivant la revendication 7,
dans lequel on dépose ( 21 ) l'oxyde d'aluminium sur la surface ( 23 ) par dépôt chimique en phase gazeuse ( CVD ).

9. Procédé suivant la revendication 8,
dans lequel on enrichit la surface ( 23 ) en aluminium à une température de 1 050°C.

10. Procédé suivant la revendication 7 ou 9,
dans lequel, dans le cadre du dépôt en phase gazeuse, on enrichit en aluminium la surface ( 23 ) pendant une durée comprise entre 3 et 5 heures.

11. Procédé suivant la revendication 10,
dans lequel on enrichit la surface ( 23 ) en aluminium pendant une durée de 4 heures.

12. Procédé suivant l'une des revendications 7 à 11,
dans lequel, dans le cadre du dépôt chimique en phase vapeur, on fait subir à la surface ( 23 ), après l'enrichissement en aluminium, un vieillissement à une température comprise entre 800°C et 900°C.

13. Procédé suivant la revendication 12,
dans lequel on fait subir à la surface ( 23 ) un vieillissement à une température de 850°C.

14. Procédé suivant l'une des revendications 7 à 13,
Dans lequel, dans le cadre du dépôt chimique en phase vapeur, on fait subir à la surface ( 23 ), après l'enrichissement en aluminium, un vieillissement pendant une durée comprise entre 1 et 3 heures.

15. Procédé suivant la revendication 14,
dans lequel on fait subir à la surface ( 23 ) un vieillissement pendant une durée de 2 heures.

16. Procédé suivant l'une des revendications 7 à 15,
dans lequel on produit un revêtement d'une épaisseur ( 22 ) de 50 µm à 100 µm.
